# FASCICULE DE BREVET EUROPEEN

(11) **EP 3 898 556 B1**
(45) Date de publication et mention de la délivrance du brevet: **18.02.2026**
(21) Numéro de dépôt: 19848965.0
(22) Date de dépôt: 18.12.2019
(51) Int. Cl.: C05G 3/00, A23K 20/158, A23K 40/10, A23K 40/30, C05G 5/30

(54) **UTILISATION D'UNE COMPOSITION LIQUIDE POUR L'ENROBAGE DE PARTICULES**
VERWENDUNG EINER FLÜSSIGKEITSZUSAMMENSETZUNG FÜR DIE BESCHICHTUNG VON TEILCHEN
USE OF A LIQUID COMPOSITION FOR COATING PARTICLES

(30) Priorité: 20.12.2018 FR 1873590
(43) Date de publication de la demande: 27.10.2021
(73) Titulaire: ARKEMA FRANCE, 92800 Puteaux (FR)
(72) Inventeur: GONZALEZ LEON, Juan Antonio, 69008 LYON (FR)
(86) Numéro de dépôt international: PCT/FR2019/053169
(87) Numéro de publication internationale: WO 2020/128336

(56) Documents cités:
- WO-A1-02/090295
- JP-A- H0 624 885
- NZ-A- 588 174
- US-A1- 2016 229 763

## Description

La présente invention concerne le domaine des compositions d'enrobage appliquées sur des matériaux granulaires, tels que des engrais granulaires, afin d'améliorer leur qualité et obtenir une conservation plus aisée, plus longue et plus sûre.

Selon l'invention, un matériau granulaire est une particule solide discrète qui peut être produite par de nombreux processus chimiques ou mécaniques différents dans lesquels un ou plusieurs composants sont consolidés.

Les engrais sont des matériaux qui fournissent un ou plusieurs des nutriments qui sont nécessaires pour le développement et la croissance corrects de plantes. Ceux-ci peuvent être, par exemple, des engrais chimiques ou minéraux, du fumier ou des résidus végétaux. Les engrais sont généralement sous la forme de matériaux granulaires, étant donné que cela facilite leur stockage, leur transport et leur utilisation dans les champs. Il existe de nombreux procédés connus pour préparer des engrais sous la forme d'un matériau granulaire, tels que la granulation, la cristallisation, le concassage, le broyage, le grelonage et le compactage, entre autres.

Cependant, les engrais sous forme granulaire ont souvent tendance à s'agglomérer et peuvent former des agrégats ou des agglomérats qui empêchent l'écoulement des granules individuels. Cela rend leur transport et leur utilisation beaucoup plus difficiles, voire impossibles. De plus, les engrais sous forme granulaire peuvent également produire des quantités modérées à élevées de poussière lorsqu'ils sont transportés, déchargés ou transférés. Des atmosphères avec des quantités de poussière fine peuvent être dangereuses et génèrent très souvent des problèmes graves de sécurité et de santé.

L'agglomération et la génération de poussière par des engrais sous forme granulaire peuvent généralement être réduites et même évitées selon des procédés déjà connus, par exemple lorsque les granules sont enrobés. De tels enrobages sont généralement pulvérisés sur les granules d'engrais à la fin de leur processus de production. Les engrais enrobés sont ensuite conservés pendant un certain temps ou transportés à un autre site où ils sont stockés ou appliqués. Ces enrobages sont généralement basés sur des composants à base de pétrole, par exemple des huiles minérales et des cires qui peuvent contenir d'autres composants, tels que des tensioactifs, pour améliorer leurs performances.

Bien que les performances de tels enrobages soient bien connues dans l'industrie, étant donné qu'ils sont actuellement utilisés pour résoudre le problème de génération de poussière et d'agglomération, l'effet réel de ces composants à base de pétrole sur les sols où les engrais sont appliqués doit être pris en compte. En effet, les huiles minérales et les cires provenant de sources pétrochimiques peuvent avoir une certaine toxicité si elles ne sont pas correctement purifiées ou traitées. De plus, elles sont généralement considérées comme étant non biodégradables, ce qui signifie qu'elle peuvent s'accumuler au cours des années dans les sols, ce qui conduit à des effets négatifs sur la croissance des cultures.

L'idée du remplacement des huiles minérales et des cires dans les enrobages d'engrais a déjà été envisagée dans le passé afin de réduire l'effet de leur agglomération pendant la conservation et réduire la poussière générée par les engrais.

Par exemple, EP1390322-B1 décrit une composition agricole qui comprend une cire et une huile qui peuvent être d'origine animale, de poisson ou végétale, une résine et un polymère. Il est revendiqué qu'elle protège un engrais à base de nitrate contre l'agglomération et la formation de poussière. Les enrobages décrits montrent que des quantités élevées de cire minérale sont nécessaires, ainsi qu'une résine et facultativement un polymère synthétique pour obtenir la protection de l'engrais souhaitée. Les formulations résultantes sont solides ou pâteuses à température ambiante et, par conséquent, doivent être chauffées pour être appliquées sur des particules d'engrais.

US10093590-B2 revendique un procédé de réduction de l'agglomération dans un engrais solide par la combinaison particulière de propylène glycol et de lactate d'éthyle. Bien que la composition soit revendiquée comme étant liquide à température ambiante, de façon à être plus facile à appliquer sur des granules d'engrais, une grande quantité d'une telle composition est nécessaire pour obtenir l'effet souhaité. De plus, le lactate d'éthyle a un point d'éclair relativement bas de 46 °C, ce qui limite la sécurité d'utilisation d'un tel type de formulations.

La demande publiée BR102015020091 revendique l'utilisation d'une composition comprenant un tensioactif d'oxyde d'alkylphénol avec une huile, qui peut être minérale ou végétale. Il n'est pas fait mention de l'état physique de la composition résultante, mais une quantité relativement élevée du tensioactif revendiqué, à savoir 15 % à 40 % de la formulation, semble être nécessaire pour obtenir l'effet souhaité. L'effet résultant est de réduire la génération de poussière, aucun effet sur la réduction de l'agglomération n'étant décrit.

ES2319367-B1 revendique l'utilisation d'une composition comprenant des sels d'esters de phosphate d'alkyle avec des trialkylamines afin d'éviter l'agglomération d'engrais granulés. La composition décrite peut être préparée en combinaison avec différentes huiles végétales. Dans les exemples, cependant, le point de fusion des compositions selon l'invention est décrit comme étant supérieur à 49 °C dans tous les cas et, par conséquent, celles-ci doivent être chauffées pour être appliquées sur les particules d'engrais.

Dans US2006040049-A1, un enrobage d'engrais pour la protection contre l'agglomération et la poussière, est revendiqué, comprenant un sel métallique d'un acide gras dans une combinaison d'esters d'acides gras. Le sel métallique d'acide gras décrit est dispersé dans différents liquides tels que des huiles minérales ou végétales. Les compositions résultantes sont cependant solides à température ambiante, avec des points de fusion supérieurs à 60 °C et, par conséquent, elles doivent être chauffées pour être appliquées sur les particules d'engrais. Des compositions d'engrais enrobés à partir d'huiles d'origine renouvelable sont divulguées par exemple dans JP H06 24885-A, NZ 588 174-A, US 2016229762-A1 ou WO02090295-A1.

Dans un grand nombre de ces exemples, afin d'obtenir l'effet souhaité de protection contre l'agglomération ou la poussière, les formulations résultantes comprenant des huiles d'origine végétale ou animale sont solides à température ambiante, ce qui rend impossible leur application directe sur les particules granulées sans fusion préalable. Dans certains cas, les compositions liquides décrites dans les documents de l'art antérieur présentent uniquement une protection contre la poussière, et non une protection contre l'agglomération ou conduisent à des risques de sécurité potentiels.

Le problème technique réel est que la plupart des formulations d'enrobage comprenant des huiles d'origine renouvelable qui confèrent une protection contre l'agglomération et la poussière à des granules d'engrais sont pratiquement impossibles à appliquer à température ambiante. Comme décrit dans l'art antérieur, des formulations d'enrobage conventionnelles doivent être fondues ou au moins chauffées avant d'être appliquées sur les granules.

Par conséquent, il est d'un intérêt pratique de proposer des méthodes alternatives pour éviter les inconvénients des techniques connues mentionnées ci-dessus, tout en produisant des enrobages d'huile d'origine renouvelable pour des matériaux granulaires afin de réduire efficacement leur tendance à l'agglomération et à la formation de poussière.

Un premier objectif de la présente invention est de proposer des formulations d'enrobage comprenant des huiles d'origine renouvelable qui confèrent une protection contre l'agglomération et la poussière à des matériaux granulaires, et en particulier, à des granules d'engrais, et qui peuvent être appliquées à l'état liquide, à température ambiante.

Un autre objectif de la présente invention est l'utilisation de composants qui permettent, à des doses relativement faibles, une préparation aisée de formulations avec différentes huiles d'origine renouvelable qui peuvent être utilisées en tant qu'enrobages de matériaux granulaires.

Selon un autre objectif supplémentaire de l'invention, les formulations de la présente invention sont utilisées et sont efficaces dans les mêmes conditions de conservation et d'application que les enrobages d'engrais actuellement connus.

La présente invention n'est pas limitée à l'enrobage d'engrais, mais est également adaptée pour un autre milieu devant être enrobé, tel que des minéraux, des céréales, des farines, des médicaments, une céramique, des agrégats minéraux de carrières et tout autre produit particulaire qui présente une tendance à s'agglomérer et/ou générer de la poussière.

Il a été désormais découvert que ces objectifs sont atteints complètement ou au moins partiellement avec la formulation spécifique de la présente invention. Hormis les objectifs mentionnés ci-dessus, d'autres apparaîtront dans la description faite ci-dessous de la présente invention.

Par conséquent, un premier objet de la présente invention est l'utilisation d'une formulation liquide pour enrober des matériaux granulaires, ladite formulation comprenant au moins une huile d'origine renouvelable et au moins un tensioactif anionique comportant au moins un groupe fonctionnel ayant un ou plusieurs hétéroatome(s), dont l'électronégativité est strictement inférieure à 2,5.

Le terme « tensioactif », dans le contexte de la présente description, désigne un composé qui contient au moins un groupe hydrophobe et au moins un groupe hydrophile. Le terme « tensioactif anionique » désigne un tensioactif dans lequel le groupe hydrophile est anionique, ce qui signifie qu'il peut devenir négativement chargé, par exemple en présence d'une base.

Dans le contexte de la présente invention, « électronégativité » est tel que défini par A.L. Alfred et E.G. Rochow (J. Inorg. Nucl. Chem., 5, (1958), p. 264). Des exemples non limitatifs d'hétéroatomes adaptés dont l'électronégativité est strictement inférieure à 2,5 comprennent un atome de phosphore, un atome de soufre, un atome de bore, et similaire.

Selon un mode de réalisation préféré de la présente invention, le groupe fonctionnel est un groupe fonctionnel anionique qui peut devenir négativement chargé, par exemple en présence d'une base. D'autres exemples préférés de groupes fonctionnels adaptés comprennent des groupes phosphate, des groupes sulfate et des groupes sulfonate.

La formulation liquide de la présente invention qui comprend à la fois au moins un tensioactif anionique spécifique et au moins une huile d'origine renouvelable, est particulièrement utile pour enrober des matériaux granulaires d'engrais, afin de prévenir l'agglomération et la génération de poussière.

Dans le contexte de l'invention, une « huile d'origine renouvelable » désigne une huile provenant d'une origine renouvelable, par opposition à une origine fossile, et de préférence d'origines végétales ou animales. L'huile d'origine renouvelable peut provenir d'une extraction directe, d'une étape intermédiaire d'un tel processus d'extraction, ainsi que d'un produit secondaire, tel qu'un distillat, ou un sous-produit dans le processus d'obtention de l'huile à partir d'une source donnée, et similaire. Elle peut également être un mélange de plusieurs de telles huiles. L'huile et les mélanges d'huiles sont simplement désignés par « huile » dans la présente description.

L'huile d'origine renouvelable pour utilisation dans la présente invention est une huile provenant d'origines végétales. Plus préférablement, l'huile d'origine renouvelable est liquide à des températures supérieures à 10 °C, avantageusement supérieures à 20 °C.

La viscosité de l'huile d'origine renouvelable à 20 °C est comprise entre 2 mPa.s et 1500 mPa.s, limites incluses, telle que mesurée au moyen d'un rhéomètre à cisaillement dynamique avec une géométrie à plaques parallèles à un taux de cisaillement de 80 s⁻¹. Encore plus préférablement, l'huile d'origine renouvelable présente un indice d'iode compris entre 70 et 150 tel que mesuré par des procédés de titrage, comme décrit dans l'ASTM D5768-02.

L'huile d'origine renouvelable peut être utilisée telle quelle ou sous une forme modifiée, par exemple, sous sa forme partiellement ou totalement hydrogénée. Des mélanges d'huiles d'origine renouvelable peuvent également être utilisés dans la présente invention.

Des exemples d'huiles d'origine renouvelable comprennent l'huile d'amande, l'huile d'avocat, l'huile de coton, l'huile de noix de cajou, l'huile de pépins de raisin, l'huile de noisette, l'huile de son de riz, l'huile de lin, l'huile d'arachide, l'huile de colza, l'huile de sésame, l'huile de tournesol, l'huile de noix de coco, l'huile de palmier, l'huile de palmiste, l'huile de maïs, l'huile de canola, l'huile de soja, l'huile d'olive et une huile dérivée de processus de fabrication de papier, telle que le tallöl. Les huiles mentionnées peuvent être sous forme brute, par exemple peuvent provenir d'étapes d'extraction mécanique ou par solvant, d'une étape de séparation ou de raffinage intermédiaire, d'une étape de modification chimique ou d'un processus de raffinage final.

De préférence, le tensioactif anionique est présent dans un rapport en poids de 0,01 à 0,43, limites incluses, par rapport à l'huile d'origine renouvelable, plus préférablement dans un rapport en poids de 0,02 à 0,33, limites incluses, par rapport à l'huile d'origine renouvelable, et encore plus préférablement dans un rapport en poids de 0,03 à 0,11, limites incluses, par rapport à l'huile d'origine renouvelable.

Dans un mode de réalisation préféré de la présente invention, le tensioactif anionique comprend un composé comportant au moins un groupe phosphate, un groupe sulfonate ou un groupe sulfate. Selon un autre mode de réalisation préféré, le tensioactif anionique comporte au moins un groupe phosphate.

Selon la présente invention, le tensioactif anionique comprend au moins un composé de formule (1) :

[R¹-A-(B)ₙ]ₘ-G (1)

dans lequel
- R¹ représente une chaîne hydrocarbonée en C₁-C₃₀, de préférence en C₂-C₃₀, de préférence en C₄-C₃₀, plus préférablement en C₆-C₃₀, avantageusement en C₆-C₂₀, linéaire ou ramifiée, saturée ou insaturée, contenant facultativement au moins un cycle aromatique,
- A représente une liaison ou un atome d'oxygène,
- (B)ₙ représente une liaison ou une séquence d'un ou plusieurs motifs de répétition d'oxyde d'alkylène, choisis parmi l'oxyde d'éthylène, l'oxyde de propylène, l'oxyde de butylène et des mélanges de ceux-ci, et n est un entier compris entre 1 et 100, de préférence entre 1 et 50, plus préférablement entre 3 et 40, limites incluses,
- m représente un entier de 1 à 3, limites incluses,
- G est choisi parmi la formule (2) et la formule (3) : 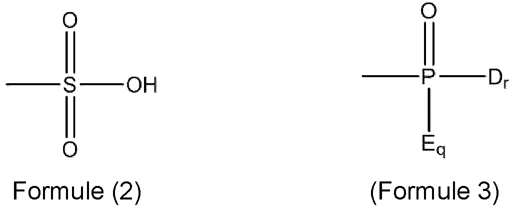
- D représente -O-(F)ᵥ-R², dans lequel
   ∘ R² représente un atome d'hydrogène ou une chaîne hydrocarbonée en C₁-C₃₀, de préférence en C₂-C₃₀, de préférence en C₄-C₃₀, plus préférablement en C₆-C₃₀, avantageusement en C₆-C₂₀, linéaire ou ramifiée, saturée ou insaturée, contenant facultativement au moins un cycle aromatique, et
   ∘ (F)ᵥ représente une liaison ou une séquence d'un ou plusieurs motifs de répétition d'oxyde d'alkylène, choisis parmi l'oxyde d'éthylène, l'oxyde de propylène, l'oxyde de butylène et des mélanges de ceux-ci, et v est un entier compris entre 1 et 100, de préférence entre 1 et 50, plus préférablement entre 3 et 40, limites incluses,
- E représente -O-[J]ₛ-R³,
   ∘ R³ représente un atome d'hydrogène ou une chaîne hydrocarbonée en C₁-C₃₀, de préférence en C₂-C₃₀, de préférence en C₄-C₃₀, plus préférablement en C₆-C₃₀, avantageusement en C₆-C₂₀, linéaire ou ramifiée, saturée ou insaturée, contenant facultativement au moins un cycle aromatique, et
   ∘ (J)ₛ représente une liaison ou une séquence d'un ou plusieurs motifs de répétition d'oxyde d'alkylène, choisis parmi l'oxyde d'éthylène, l'oxyde de propylène, l'oxyde de butylène et des mélanges de ceux-ci, et s est un entier compris entre 1 et 100, de préférence entre 1 et 50, plus préférablement entre 3 et 40, limites incluses, et
- q et r représentent chacun des entiers choisis 0, 1 et 2, à condition que m + q + r = 3.

Selon la présente invention, il est entendu qu'un « groupe oxyde d'éthylène » est le motif de répétition d'oxyde d'éthylène résultant de l'ouverture d'un cycle oxirane.

Selon la présente invention, il est entendu qu'un « groupe oxyde de propylène » est le motif de répétition d'oxyde de propylène résultant de l'ouverture d'un cycle méthyloxirane.

Selon la présente invention, il est entendu qu'un « groupe oxyde de butylène » est le motif de répétition d'oxyde de butylène résultant de l'ouverture d'un cycle 2-éthyloxirane.

De préférence, lorsque le composé de formule (1) comprend une ou plusieurs séquences d'un ou plusieurs motifs de répétition d'oxyde d'alkylène, lesdits motifs de répétition peuvent être présents de façon aléatoire, alternée ou séquencée.

Dans un mode de réalisation, les composés de formule (1) préférés sont ceux dans lesquels m est égal à 1 et D et E représentent chacun un groupe -OH.

Dans un autre mode de réalisation, des composés de formule (1) préférés sont ceux dans lesquels m est égal à 2 et au moins l'un de D ou E représente un groupe -OH.

Dans un autre mode de réalisation supplémentaire, des composés de formule (1) préférés sont ceux dans lesquels v et s ont la même valeur.

Selon un autre mode de réalisation, des composés de formule (1) préférés sont ceux dans lesquels :
- R¹ représente une chaîne hydrocarbonée en C₆-C₂₀, linéaire ou ramifiée, saturée ou insaturée,
- A représente un atome d'oxygène,
- (B)ₙ représente une séquence d'un ou plusieurs motifs de répétition d'oxyde d'alkylène, choisis parmi l'oxyde d'éthylène, l'oxyde de propylène, l'oxyde de butylène et des mélanges de ceux-ci, et n a une valeur comprise entre 3 et 15, limites incluses,
- G représente le groupe de formule (3) dans lequel, q est 0, r est 1 ou 2, D représente le groupe -OH, et
- m est 1 ou 2, à condition que m + r + q = 3.
Selon un autre mode de réalisation supplémentaire, des composés de formule (1) préférés sont ceux dans lesquels :
- R¹ représente une chaîne hydrocarbonée en C₆-C₂₀, linéaire ou ramifiée, saturée ou insaturée,
- A représente un atome d'oxygène,
- (B)ₙ représente une liaison, et,
- G représente le groupe de formule (3) dans lequel, q est 0, r est 1 ou 2, D représente le groupe -OH, et
- m est 1 ou 2, à condition que m + r + q = 3.
Selon un autre mode de réalisation supplémentaire, des composés de formule (1) préférés sont ceux dans lesquels :
- R¹ représente une chaîne hydrocarbonée en C₆-C₂₀, linéaire ou ramifiée, saturée ou insaturée,
- A représente un atome d'oxygène,
- (B)ₙ représente une séquence d'un ou plusieurs motifs de répétition d'oxyde d'alkylène, choisis parmi l'oxyde d'éthylène, l'oxyde de propylène, l'oxyde de butylène et des mélanges de ceux-ci, et n a une valeur comprise entre 3 et 15, et
- G représente le groupe de formule (2).
Selon un autre mode de réalisation supplémentaire, des composés de formule (1) préférés sont ceux dans lesquels :
- R¹ représente une chaîne hydrocarbonée en C₆-C₂₀, linéaire ou ramifiée, saturée ou insaturée,
- A représente une liaison,
- (B)ₙ représente une liaison, et
- G représente le groupe de formule (2).

Selon un mode de réalisation préféré de la présente invention, le tensioactif anionique est un phosphate d'ester d'alkyle monoéthoxylé ou un phosphate d'ester d'alkyle diéthoxylé.

Selon un autre mode de réalisation préféré de la présente invention, le tensioactif anionique est choisi parmi un phosphate d'ester de monoalkyle et un phosphate d'ester de dialkyle.

Selon un autre mode de réalisation préféré de la présente invention, le tensioactif anionique est un sulfate d'alkyle éthoxylé.

Selon un autre mode de réalisation préféré supplémentaire de la présente invention, le tensioactif anionique est un sulfonate d'alkylaryle.

Dans un autre mode de réalisation préféré de la présente invention, la composition d'enrobage liquide comprend un phosphate d'ester d'alkyle alcoxylé et une huile végétale.

Dans un autre mode de réalisation préféré supplémentaire de la présente invention, la composition d'enrobage liquide comprend un sulfate d'alkyle éthoxylé et une huile végétale.

Dans un autre mode de réalisation préféré supplémentaire de la présente invention, la composition d'enrobage liquide comprend un sulfonate d'alkylaryle et une huile végétale.

La composition d'enrobage liquide de la présente invention peut comprendre en outre un ou plusieurs autres composants, tels que, par exemple, l'un ou plusieurs de ceux-ci, tels que des additifs, des charges et similaire, et qui sont couramment utilisés dans l'art, de tels composants étant éventuellement et avantageusement choisis parmi :
- des agents antiagglomérants, et de préférence des tensioactifs antiagglomérants tel que des alkylamines, des acides gras, des esters phosphoriques d'alkyle, des esters phosphoriques d'éther d'alkyle, des alcools d'alkyle linéaire, des sulfates d'alkyle alcoxylé, des sulfates d'éther d'alkyle, des sulfonates d'alkyle alcoxylé, des sulfonates d'éther d'alkyle et des combinaisons de ceux-ci, de préférence des sels d'alkylamines avec des esters phosphoriques d'alkyle,
- des modificateurs de rhéologie tels que des polymères biodégradables ou non biodégradables, des cires, de préférence des cires d'origines minérales, d'origines renouvelables, ou des cires synthétiques, telles que des cires de Fischer-Tropsch, des résines, telles que des acides rosiniques, ou des acides rosiniques modifiés, le brai de tallôl, le brai de goudron de pin, des colophanes de pin, des colophanes de tallöl, des amidoamides, des alkylamidoamides,
- des agents d'hydrophobisation tels que des alcools d'alkyle linéaire ou des cires macrocristallines,
- des agents de dispersion tels que des huiles d'origines minérales,
- des colorants, des traceurs UV, des pigments,
- des micronutriments minéraux et/ou organiques et des oligo-éléments, qui peuvent être, mais sont de préférence, finement dispersés et/ou compatibilisés, par exemple des complexes métalliques,
- des biostimulants, tels que des substances et matériaux minéraux ou organiques qui sont ajoutés pour améliorer ou maintenir les fonctions biologiques de sols, d'animaux et de plantes,
- des pesticides, tels que des insecticides, des herbicides, des fongicides, des nématocides et similaire,
- des bactéries, des levures, des champignons, des virus,
- des antioxydants, par exemple la tert-butylhydroquinone (également appelée TBHQ), des conservateurs, des agents anti-UV,
- des agents de masquage d'odeur, des antiodorants, des arômes, des parfums,
- ainsi que des mélanges de deux ou plus des composants énumérés ci-dessus.

De préférence, le tensioactif anionique est un liquide à température ambiante et, plus préférablement, la viscosité du tensioactif anionique à 25 °C est comprise entre 2 mPa.s et 5000 mPa.s, limites incluses, telle que mesurée au moyen d'un rhéomètre à cisaillement dynamique avec une géométrie à plaques parallèles à un taux de cisaillement de 80 s⁻¹.

De préférence, le tensioactif anionique qui est mélangé avec l'huile d'origine renouvelable, est utilisé à des doses comprises entre 1 % en poids et 30 % en poids, plus préférablement entre 1 % en poids et 25 % en poids, encore plus préférablement entre 2 % en poids et 20 % en poids, et encore plus préférablement entre 2 % en poids et 15 % en poids, avantageusement entre 3 % en poids et 10 % en poids, limites incluses, par rapport à l'huile d'origine renouvelable.

La formulation d'enrobage liquide pour utilisation dans la présente invention peut comprendre une ou plusieurs huile(s) d'origine renouvelable, et un ou plusieurs agent(s) tensioactif(s) anionique(s), tels que décrits précédemment.

La formulation d'enrobage liquide obtenue peut être utilisée dans plusieurs domaines d'application différents, et présente une utilisation particulièrement efficace en tant qu'enrobage pour des granules d'engrais, ou d'autres produits minéraux, afin de réduire et même éviter la l'agglomération de telles particules d'engrais. Les formulations d'enrobage liquides de la présente invention peuvent également être très utiles pour leurs propriétés antipoussière, en particulier lorsqu'elle est utilisée en tant qu'enrobage pour des granules d'engrais, ou d'autres produits minéraux.

Par conséquent, et comme indiqué ci-dessus, la présente invention concerne l'utilisation de la formulation d'enrobage liquide décrite ci-dessus pour enrober un matériau granulaire, où le matériau granulaire peut être un matériau granulaire quelconque connu dans l'art, tel que ceux choisis parmi, en tant qu'exemples non limitatifs, des engrais, du charbon, des minerais de minéraux, des agrégats de minéraux, du soufre, des copeaux de bois, de la boue, des déchets granulés, des médicaments, des céréales, des aliments granulés pour animaux, et similaire, et plus préférablement, le matériau granulaire est un engrais.

« Engrais », dans le contexte de l'invention, est une particule de matière inorganique et/ou organique qui fournit au sol et/ou aux cultures des nutriments minéraux et/ou organiques ou d'autres substances qui améliorent leur croissance. Les particules d'engrais peuvent provenir d'un processus quelconque connu pour produire des engrais tel que la granulation, le broyage, le mélange ou la formulation, le compactage ou le grelonage.

De préférence, les particules d'engrais comprennent des nitrates, tels que des nitrates d'ammonium, des nitrophosphates, le phosphate-sulfate d'ammonium, le sulfate d'ammonium, des nitrates de calcium-ammonium, le nitrate de calcium, le phosphate de diammonium, le chlorure de potassium, le phosphate de monoammonium, le muriate de potasse, le sulfate de potasse, le sulfate de potasse-magnésie, le superphosphate simple, le superphosphate triple, l'urée, le soufre, la polyhalite et d'autres engrais complexes ou composites qui contiennent plusieurs éléments, et, par exemple, ceux connus sous l'acronyme NPK.

La composition de la présente invention peut être appliquée en utilisant un procédé d'enrobage quelconque connu de l'homme du métier, ou selon des procédés courants similaires utilisés pour enrober des particules, tels que ceux utilisés pour des engrais granulés, tels que, par exemple, selon des techniques d'enrobage par pulvérisation connues. Cela peut être effectué en utilisant un procédé discontinu ou continu. Par exemple, l'engrais granulé peut être introduit dans un cylindre d'enrobage rotatif tandis que l'enrobage est appliqué par l'intermédiaire d'une ou plusieurs buses sous pression. L'enrobage peut également être pulvérisé tandis que l'engrais granulé tourne sur un tambour de granulation incliné ou est à l'intérieur d'une chambre à lit fluidisé.

L'étape d'enrobage avec la formulation d'enrobage liquide de la présente invention peut être effectuée avant, et/ou simultanément avec, et/ou après le(s) enrobage(s) d'un autre matériau, tel(s) que, par exemple l'enrobage de nutriments ou fonctions biologiques supplémentaires qui sont utiles pour les sols ou les animaux ou les plantes, l'enrobage d'agents antiagglomérants, tels que, par exemple, des argiles (par exemple, un kaolin), le talc, et similaire.

Une fois appliquée sur la surface d'un matériau granulaire, la quantité de formulation d'enrobage liquide enduite sur le matériau granulaire peut varier dans des proportions élevées et est, avantageusement et de préférence, comprise comprises entre 0,01 % en poids et 10 % en poids, plus préférablement entre 0,02 % en poids et 2 % en poids, limites incluses, par rapport à la masse totale du matériau granulaire enduit.

La présente invention concerne en outre le matériau granulaire enrobé avec la formulation liquide de la présente invention. Une fois appliquée sur la surface d'un matériau granulaire (par exemple et de préférence, un granule d'engrais), il est démontré que la formulation liquide de la présente invention est efficace pour atteindre un ou plusieurs des objectifs suivants :
- réduire ou éviter l'agglomération des particules enrobées,
- réduire ou éviter la libération de poussière à partir des particules enrobées,
- réduire ou éviter l'absorption d'humidité dans les particules enrobées,
- lier d'autres particules minérales ou organiques à la particule enrobée.

Selon un mode de réalisation préféré, la présente invention concerne un granule d'engrais enrobé avec une formulation liquide de la présente invention. Selon un autre mode de réalisation préféré, le matériau granulaire, par exemple un granule d'engrais est enrobé avec une formulation liquide de la présente invention qui représente entre 0,01 % en poids et 10 % en poids, plus préférablement entre 0,02 % en poids et 2 % en poids, avantageusement entre 0,1 % en poids et 1 % en poids, limites incluses, par rapport à la masse totale du matériau granulaire enrobé.

La formulation liquide de la présente invention permet l'obtention de particules enrobées, et de préférence d'engrais présentant un ou plusieurs des avantages ci-après, parmi lesquels il peut être mentionné :
- aucune réaction chimique ne se produit entre le liquide et la particule enrobée,
- l'enrobage liquide n'est pas un polymère (un changement de la législation européenne est en cours pour réduire/supprimer l'utilisation de polymères dans les engrais),
- l'agent de formation de liquide est utilisé à des concentrations très faibles (l'huile d'origine renouvelable est alors le composant majeur et plus économique de la formulation de gel),
- compatibilité avec plusieurs types d'huiles d'origine renouvelable, tels que des huiles raffinées, brutes ou des résidus de distillation,
- le procédé d'enrobage est le même que les procédés actuels connus dans l'art pour enrober des particules (même équipement de pulvérisation/enrobage, mêmes températures de pulvérisation).

La formulation liquide de la présente invention peut être utilisée dans différents autres domaines d'application et est particulièrement adaptée pour l'enrobage de particules, qui présentent une tendance à s'agréger ou s'agglomérer et/ou générer de la poussière, telles que des céréales, des farines, des médicaments, des céramiques, des agrégats minéraux de carrières, et similaire.

Elle est compatible avec d'autres composants d'enrobages d'engrais couramment utilisés tels que des tensioactifs, des alcools, des cires, etc.

L'invention est illustrée plus avant ci-après par les exemples suivants, qui sont présentés en tant que modes de réalisation de l'invention uniquement, sans induire une limitation quelconque de la portée de protection telle que définie par les revendications annexées.

### EXEMPLES

### Exemple 1

Une composition A selon l'invention est préparée par mélange de 47,5 g d'huile de soja dégommée de Cefetra et 2,5 g d'un tensioactif d'ester de phosphate alcoxylé, comprenant une chaîne hydrocarbonée avec 16 à 18 carbones et 4,5 motifs d'oxyde d'éthylène (Surfaline^{®} PE684 d'ARKEMA), sous agitation. Le dégommage est un procédé de raffinage bien connu, dans lequel les impuretés de l'huile de soja, en particulier les phosphatides ou les gommes, sont éliminées de l'huile végétale brute. Une fois que le deuxième composant est incorporé, l'agitation est arrêtée. La composition A est limpide et est liquide à température ambiante.

Une autre composition, composition comparative B, est préparée par mélange de 47,5 g d'huile de soja dégommée de Cefetra et 2,5 g d'acide oléique (commercialisé, par exemple, par VWR sous la référence 20447-293) sous agitation. Une fois que le deuxième composant est incorporé, l'agitation est arrêtée. La composition B est limpide et est liquide à température ambiante.

Les viscosités des compositions préparées sont mesurées au moyen d'un rhéomètre à cisaillement dynamique Anton Paar MCR301 avec une géométrie à plaques parallèles de 50 mm (PP50), entre 50 °C et 10 °C à un taux de cisaillement de 80 s⁻¹ pour obtenir une valeur de 46,9 mPas à 25 °C pour la composition A et 43,1 mPas pour la composition comparative B.

Les deux formulations préparées sont liquides à température ambiante, leurs propriétés en termes de protection contre l'agglomération et la poussière sont évaluées dans les exemples suivants.

### Exemple 2

Les essais suivants sont conduits afin d'évaluer la tendance à l'agglomération d'un échantillon enrobé de phosphate de diammonium (DAP) après avoir été soumis à une température et une pression et pendant le transport.

La composition A, de l'exemple 1, (selon l'invention) est utilisée en tant qu'enrobage sur les granules DAP. De manière similaire, de l'huile de soja (dégommée, comme décrit ci-dessus), et une composition B, préparée comme décrit dans l'exemple 1, sont également évaluées pour l'agglomération en tant qu'exemple comparatif à la même dose. 500 g de granules de DAP sont chauffés à 40 °C pendant 4 heures avant d'être mélangés dans un cylindre d'enrobage de laboratoire à extrémité ouverte et pulvérisés avec 0,75 g d'échantillon de formulation d'enrobage, à 90 °C.

Un essai d'agglomération accéléré est conduit avec les échantillons enrobés. Des moules métalliques sont remplis avec 150 g des granules de DAP enrobés, fermés et soumis à 3 bar de pression pneumatique constante pendant 3 jours. La température des échantillons est maintenue à 40 °C pendant l'ensemble des 3 jours. Trois échantillons sont préparés pour chaque échantillon enrobé. Un échantillon non enrobé est également évalué pour comparaison.

À la fin des trois jours, les moules sont soigneusement ouverts et comprimés dans une machine de compression universelle (Instron 3365). La force à la rupture des échantillons est enregistrée dans chaque cas. Le tableau 1 présente les valeurs intégrales des résultats obtenus pour chaque enrobage (force à la rupture en kilogrammes-force, kgf).

**-- Tableau 1 --**

| | ***Force à la rupture (kgf)*** | ***Écart type de la force à la rupture*** |
|---|---|---|
| Non enrobé | 64 | 5 |
| Huile de soja (référence) | 33 | 3 |
| Composition A | 25 | 3 |
| Composition B | 34 | 6 |

### -- Agglomération d'engrais enrobés --

Il peut être observé que le tensioactif dans la composition A améliore significativement la protection contre l'agglomération conférée par l'huile de soja par elle-même. La composition B, contenant la même huile de soja, mais avec un tensioactif anionique différent, n'améliore pas du tout la protection contre l'agglomération.

### Exemple 3

Les essais suivants sont conduits afin d'évaluer la quantité de poussière générée par le même échantillon de DAP enrobé dans l'exemple 1 pendant le transport. Les essais sont conduits au moyen d'un appareil optique de mesure de poussière Microtrack. Un échantillon de 300 g d'engrais enrobé est introduit dans l'appareil et la poussière générée par le dépôt (en raison de l'impact après la chute) est enregistrée par des procédés optiques pendant 60 secondes. La quantité de poussière générée est proportionnelle à l'intégrale du signal optique mesuré (unités arbitraires) en fonction du temps de mesure.

La valeur de l'intégrale permet d'effectuer une comparaison entre des enrobages, le meilleur enrobage étant celui ayant la valeur la plus faible. Les granules de DAP enrobés sont conservés dans un récipient fermé à 40 °C pendant 7 jours avant d'être évalués pour la formation de poussière.

Le tableau 2 présente les valeurs intégrales de l'essai de poussière pour chaque enrobage (intégrale des valeurs de signal optique).

**-- Tableau 2 --**

| | ***Poussière générée*** |
|---|---|
| Non enrobé | 3,07 |
| Huile de soja (référence) | 0,38 |
| Composition A | 0,05 |
| Composition B | 0,62 |

### -- Poussière générée par des engrais enrobés --

Bien que toutes les solutions évaluées produisent un certain degré de protection contre la poussière, la composition A présente les meilleures valeurs de protection contre la poussière (plus faible taux de poussière générée après stockage simulé). La valeur est significativement meilleure que la même huile de soja par elle-même, et la composition qui contient un tensioactif différent (composition B).

### Exemple 4

Une composition C selon l'invention est préparée par mélange de 45 g d'huile de soja dégommée de Cefetra et 5 g d'un tensioactif d'ester de phosphate alcoxylé, comprenant une chaîne hydrocarbonée avec 16 à 18 carbones et 4,5 motifs d'oxyde d'éthylène (Surfaline^{®} PE684 d'ARKEMA), sous agitation. Le dégommage est un procédé de raffinage bien connu, dans lequel les impuretés de l'huile de soja, en particulier les phosphatides ou les gommes, sont éliminées de l'huile végétale brute. Une fois que le deuxième composant est incorporé, l'agitation est arrêtée. La composition C est limpide et est liquide à température ambiante.

Une autre composition, composition comparative D, est préparée par mélange de 47,5 g d'huile minérale ayant une viscosité cinématique à 40 °C comprise entre 130 et 220 mm²/s (commercialisée par Colas sous le nom 700S) et 2,5 g d'une amine grasse commercialisée sous le nom Noram SH par ARKEMA à 60 °C. Après 10 minutes d'agitation, la formulation est refroidie. La composition D est trouble et pâteuse à température ambiante.

Les viscosités des compositions préparées sont mesurées au moyen d'un rhéomètre à cisaillement dynamique Anton Paar MCR301 avec une géométrie à plaques parallèles de 50 mm (PP50), entre 50 °C et 10 °C à un taux de cisaillement de 80 s⁻¹ pour obtenir une valeur de 51,1 mPas à 25 °C pour la composition C et 172 mPas pour la composition comparative D.

Des essais sont conduits afin d'évaluer la tendance à l'agglomération d'échantillons enrobés de nitrate d'ammonium (CAN) après avoir été soumis à une température et une pression et pendant le transport.

Des compositions C, selon l'invention, et la composition comparative D sont utilisées en tant qu'enrobage sur les granules de CAN. 500 g de granules de CAN sont chauffés à 40 °C pendant 4 heures avant d'être mélangés dans un cylindre d'enrobage de laboratoire à extrémité ouverte et pulvérisés avec 0,1 g d'échantillon de formulation d'enrobage, à 90 °C et 0,3 g de talc (de Luzenac). Un essai d'agglomération accéléré est conduit avec les échantillons enrobés. Des moules métalliques sont remplis avec 150 g des granules de CAN enrobés, fermés et soumis à 3 bar de pression pneumatique constante pendant 1 jour. La température des échantillons est maintenue à 40 °C pendant l'ensemble du jour.

Trois échantillons sont préparés pour chaque échantillon enrobé. Un échantillon non enrobé est également évalué pour comparaison. À la fin de ce jour, les moules sont soigneusement ouverts et comprimés dans une machine de compression universelle (Instron 3365). La force à la rupture des échantillons est enregistrée dans chaque cas. Le tableau 3 présente les valeurs intégrales des résultats obtenus pour chaque enrobage (force à la rupture en kilogrammes-force, kgf).

**-- Tableau 3 --**

| | ***Force à la rupture (kgf)*** | ***Écart type de la force* à *la rupture*** |
|---|---|---|
| Non enrobé | 90 | 18 |
| Composition C | 2,5 | 0,8 |
| Composition D | 1,8 | 0,7 |

### -- Agglomération d'engrais enrobés --

Il peut être observé que le tensioactif dans la composition C, selon l'invention, réduit significativement la force nécessaire pour rompre l'agglomérat formé. La valeur obtenue est similaire à celle obtenue avec une formulation d'enrobage cationique antiagglomérante couramment utilisée (composition comparative D).

## Revendications

1. Utilisation d'une formulation liquide pour enrober des matériaux granulaires, ladite formulation comprenant :
- au moins une huile d'origine renouvelable dont la viscosité à 20 °C est comprise entre 2 mPa.s et 1500 mPa.s, limites incluses, telle que mesurée au moyen d'un rhéomètre à cisaillement dynamique avec une géométrie à plaques parallèles à un taux de cisaillement de 80 s⁻¹, et choisie parmi l'huile d'amande, l'huile d'avocat, l'huile de coton, l'huile de noix de cajou, l'huile de pépins de raisin, l'huile de noisette, l'huile de son de riz, l'huile de lin, l'huile d'arachide, l'huile de colza, l'huile de sésame, l'huile de tournesol, l'huile de noix de coco, l'huile de palmier, l'huile de palmiste, l'huile de maïs, l'huile de canola, l'huile de soja, l'huile d'olive et une huile dérivée de processus de fabrication de papier, et
- au moins un tensioactif anionique comportant au moins un groupe fonctionnel ayant un ou plusieurs hétéroatome(s), dont l'électronégativité est strictement inférieure à 2,5, ledit tensioactif anionique comprenant au moins un composé de formule (1) :
[R¹-A-(B)ₙ]ₘ-G (1)
dans lequel
• R¹ représente une chaîne hydrocarbonée en C₁-C₃₀, de préférence en C₂-C₃₀, de préférence en C₄-C₃₀, plus préférablement en C₆-C₃₀, avantageusement en C₆-C₂₀, linéaire ou ramifiée, saturée ou insaturée, contenant facultativement au moins un cycle aromatique,
• A représente une liaison ou un atome d'oxygène,
• (B)ₙ représente une liaison ou une séquence d'un ou plusieurs motifs de répétition d'oxyde d'alkylène, choisis parmi l'oxyde d'éthylène, l'oxyde de propylène, l'oxyde de butylène et des mélanges de ceux-ci, et n est un entier compris entre 1 et 100, de préférence entre 1 et 50, plus préférablement entre 3 et 40, limites incluses,
• m représente un entier de 1 à 3, limites incluses,
• G est choisi parmi la formule (2) et la formule (3) : 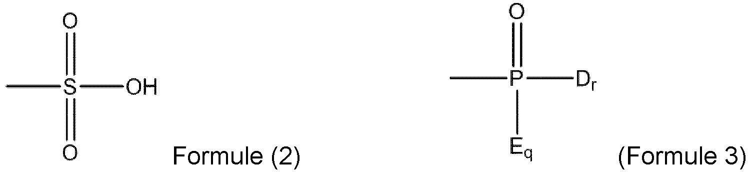
• D représente -O-(F)ᵥ-R², dans lequel
∘ R² représente un atome d'hydrogène ou une chaîne hydrocarbonée en C₁-C₃₀, de préférence en C₂-C₃₀, de préférence en C₄-C₃₀, plus préférablement en C₆-C₃₀, avantageusement en C₆-C₂₀, linéaire ou ramifiée, saturée ou insaturée, contenant facultativement au moins un cycle aromatique, et
∘ (F)ᵥ représente une liaison ou une séquence d'un ou plusieurs motifs de répétition d'oxyde d'alkylène, choisis parmi l'oxyde d'éthylène, l'oxyde de propylène, l'oxyde de butylène et des mélanges de ceux-ci, et v est un entier compris entre 1 et 100, de préférence entre 1 et 50, plus préférablement entre 3 et 40, limites incluses,
• E représente -O-[J]ₛ-R³,
∘ R³ représente un atome d'hydrogène ou une chaîne hydrocarbonée en C₁-C₃₀, de préférence en C₂-C₃₀, de préférence en C₄-C₃₀, plus préférablement en C₆-C₃₀, avantageusement en C₆-C₂₀, linéaire ou ramifiée, saturée ou insaturée, contenant facultativement au moins un cycle aromatique, et
∘ (J)ₛ représente une liaison ou une séquence d'un ou plusieurs motifs de répétition d'oxyde d'alkylène, choisis parmi l'oxyde d'éthylène, l'oxyde de propylène, l'oxyde de butylène et des mélanges de ceux-ci, et s est un entier compris entre 1 et 100, de préférence entre 1 et 50, plus préférablement entre 3 et 40, limites incluses, et
• q et r représentent chacun des entiers choisis parmi 0, 1 et 2, à condition que m + q + r = 3.

2. Utilisation selon la revendication 1, dans laquelle l'huile dérivée de processus de fabrication de papier est le tallöl.

3. Utilisation selon l'une quelconque des revendications précédentes, dans laquelle le tensioactif anionique est présent dans un rapport en poids de 0,01 à 0,43, limites incluses, par rapport à l'huile d'origine renouvelable, plus préférablement dans un rapport en poids de 0,02 à 0,33, limites incluses, par rapport à l'huile d'origine renouvelable, et encore plus préférablement dans un rapport en poids de 0,03 à 0,11, limites incluses, par rapport à l'huile d'origine renouvelable.

4. Utilisation selon l'une quelconque des revendications précédentes, dans laquelle le tensioactif anionique comprend un composé comportant au moins un groupe phosphate.

5. Utilisation selon l'une quelconque des revendications précédentes, dans laquelle le tensioactif anionique est l'un choisi parmi un phosphate d'ester de monoalkyle, un phosphate d'ester de dialkyle, un phosphate d'ester d'alkyle monoéthoxylé, un phosphate d'ester d'alkyle diéthoxylé, un sulfate d'alkyle éthoxylé et un sulfonate d'alkylaryle.

6. Utilisation selon l'une quelconque des revendications précédentes, dans laquelle le tensioactif anionique qui est mélangé avec l'huile d'origine renouvelable, est utilisé à des doses comprises entre 1 % en poids et 30 % en poids, plus préférablement entre 1 % en poids et 25 % en poids, encore plus préférablement entre 2 % en poids et 20 % en poids, et encore plus préférablement entre 2 % en poids et 15 % en poids, avantageusement entre 3 % en poids et 10 % en poids, limites incluses, par rapport à l'huile d'origine renouvelable.

7. Utilisation selon l'une quelconque des revendications précédentes, dans laquelle ledit matériau granulaire peut être un matériau granulaire quelconque connu dans l'art, tel que ceux choisis parmi, en tant qu'exemples non limitatifs, engrais, charbon, minerais de minéraux, agrégats de minéraux, soufre, copeaux de bois, boue, déchets granulés, médicaments, céréales, aliment pour animaux granulé, et similaire, et plus préférablement, le matériau granulaire est un engrais.

8. Utilisation selon l'une quelconque des revendications précédentes, dans laquelle ledit matériau granulaire est un engrais choisi parmi des nitrates, tels que des nitrates d'ammonium, des nitrophosphates, le phosphate-sulfate d'ammonium, le sulfate d'ammonium, des nitrates de calcium-ammonium, le nitrate de calcium, le phosphate de diammonium, le chlorure de potassium, le phosphate de monoammonium, le muriate de potasse, le sulfate de potasse, le sulfate de potasse-magnésie, le superphosphate simple, le superphosphate triple, l'urée, le soufre, la polyhalite et d'autres engrais complexes ou composites qui contiennent plusieurs éléments, et ceux connus sous l'acronyme NPK.

9. Matériau granulaire enrobé avec la formulation liquide comprenant au moins une huile d'origine renouvelable telle que définie dans la revendication 1 et au moins un tensioactif anionique comportant au moins un groupe fonctionnel ayant un ou plusieurs hétéroatome(s), dont l'électronégativité est strictement inférieure à 2,5 tel que défini dans la revendication 1.

10. Matériau granulaire selon la revendication 9, dans lequel la quantité de formulation liquide enrobée sur ledit matériau granulaire est comprise entre 0,01 % en poids et 10 % en poids, plus préférablement entre 0,02 % en poids et 2 % en poids, avantageusement entre 0,1 % en poids et 1 % en poids, limites incluses, par rapport à la masse totale du matériau granulaire enrobé.

11. Matériau granulaire selon la revendication 9 ou la revendication 10, le matériau granulaire étant un granule d'engrais.

## Patentansprüche

1. Verwendung einer flüssigen Formulierung, um granulatartige Materialien zu umhüllen, wobei die Formulierung Folgendes umfasst:
- mindestens ein Öl erneuerbaren Ursprungs, dessen Viskosität bei 20 °C im Bereich von 2 mPa.s bis 1500 mPa.s einschließlich der Grenzwerte liegt, wobei die Messung mittels eines Rheometers mit dynamischer Scherwirkung erfolgt, dessen parallele Platten derart angeordnet sind, dass eine Schergeschwindigkeit von 80 s⁻¹ erzielt wird, und es aus Mandelöl, Avocadoöl, Baumwollsaatöl, Cashewnussöl, Traubenkernöl, Haselnussöl, Reiskeimöl, Leinöl, Erdnussöl, Rapsöl, Sesamöl, Sonnenblumenöl, Kokosöl, Palmöl, Palmkernöl, Maiskeimöl, kanadischem Rapsöl, Sojaöl, Olivenöl und einem Öl ausgewählt ist, welches aus Papierherstellungsprozessen stammt, und
- mindestens ein anionisches Tensid, das mindestens eine funktionelle Gruppe aufweist, welche ein oder mehrere Heteroatom(e) aufweist, dessen/deren Elektronegativität streng kleiner als 2,5 ist, wobei das anionische Tensid mindestens eine Verbindung nach Formel (1) aufweist:
[R¹-A-(B)-G (1)
wobei
• R¹ für eine Kohlenwasserstoffkette von C₁-C₃₀, vorzugsweise von C₂-C₃₀, vorzugsweise von C₄-C₃₀, stärker bevorzugt von C₆-C₃₀, vorteilhafterweise von C₆-C₂₀, geradkettig oder verzweigt, gesättigter oder ungesättigter Art steht, wobei sie möglicherweise mindestens einen aromatischen Ring enthält,
• A für eine Bindung oder ein Sauerstoffatom steht,
• (B)ₙ für eine Bindung oder eine Sequenz aus einem oder mehreren Wiederholbausteinen an Alkylenoxid steht, die aus Ethylenoxid, Propylenoxid, Butylenoxid und Mischungen davon ausgewählt sind, und n eine ganze Zahl ist, die im Bereich von 1 bis 100, vorzugsweise von 1 bis 50, stärker bevorzugt von 3 bis 40 einschließlich der Grenzwerte liegt,
• m für eine ganze Zahl von 1 bis 3 einschließlich der Grenzwerte steht,
• G aus der Formel (2) und der Formel (3) ausgewählt ist: 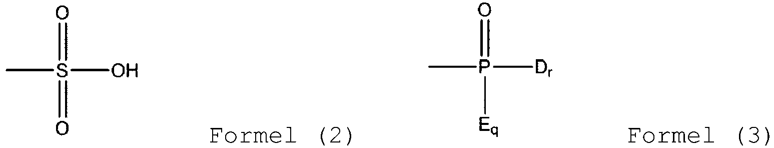
• D für -O-(F)ᵥ-R² steht, wobei
∘ R² für ein Wasserstoffatom oder eine Kohlenwasserstoffkette von C₁-C₃₀, vorzugsweise von C₂-C₃₀, vorzugsweise von C₄-C₃₀, stärker bevorzugt von C₆-C₃₀, vorteilhafterweise von C₆-C₂₀, geradkettig oder verzweigt, gesättigter oder ungesättigter Art steht, wobei sie möglicherweise mindestens einen aromatischen Ring enthält, und
∘ (F)ᵥ für eine Bindung oder eine Sequenz aus einem oder mehreren Wiederholbausteinen an Alkylenoxid steht, die aus Ethylenoxid, Propylenoxid, Butylenoxid und Mischungen davon ausgewählt sind, und v eine ganze Zahl ist, die im Bereich von 1 bis 100, vorzugsweise von 1 bis 50, stärker bevorzugt von 3 bis 40 einschließlich der Grenzwerte liegt,
• E für -O-[J]ₛ-R³ steht,
∘ R³ für ein Wasserstoffatom oder eine Kohlenwasserstoffkette von C₁-C₃₀, vorzugsweise von C₂-C₃₀, vorzugsweise von C₄-C₃₀, stärker bevorzugt von C₆-C₃₀, vorteilhafterweise von C₆-C₂₀, geradkettig oder verzweigt, gesättigter oder ungesättigter Art steht, wobei sie möglicherweise mindestens einen aromatischen Ring enthält, und
∘ (J)ₛ für eine Bindung oder eine Sequenz aus einem oder mehreren Wiederholbausteinen an Alkylenoxid steht, die aus Ethylenoxid, Propylenoxid, Butylenoxid und Mischungen davon ausgewählt sind, und s eine ganze Zahl ist, die im Bereich von 1 bis 100, vorzugsweise von 1 bis 50, stärker bevorzugt von 3 bis 40 einschließlich der Grenzwerte liegt, und
• q und r jeweils für ganze Zahlen stehen, die aus 0, 1 und 2 ausgewählt sind, mit der Maßgabe, dass m + q + r = 3 ist.

2. Verwendung nach Anspruch 1, wobei es sich bei dem Öl, welches aus Papierherstellungsprozessen stammt, um Tallöl handelt.

3. Verwendung nach einem beliebigen der vorhergehenden Ansprüche, wobei das anionische Tensid in einem Gewichtsverhältnis von 0,01 bis 0,43 einschließlich der Grenzwerte, bezogen auf das Öl erneuerbaren Ursprungs, stärker bevorzugt in einem Gewichtsverhältnis von 0,02 bis 0,33 einschließlich der Grenzwerte, bezogen auf das Öl erneuerbaren Ursprungs, und noch stärker bevorzugt in einem Gewichtsverhältnis von 0,03 bis 0,11 einschließlich der Grenzwerte, bezogen auf das Öl erneuerbaren Ursprungs, vorliegt.

4. Verwendung nach einem beliebigen der vorhergehenden Ansprüche, wobei das anionische Tensid eine Verbindung umfasst, die mindestens eine Phosphatgruppe aufweist.

5. Verwendung nach einem beliebigen der vorhergehenden Ansprüche, wobei es sich bei dem anionischen Tensid um eines handelt, das aus einem Monoalkylesterphosphat, einem Dialkylesterphosphat, einem monoethoxylierten Alkylesterphosphat, einem diethoxylierten Alkylesterphosphat, einem ethoxylierten Alkylsulfat und einem Alkylarylsulfonat ausgewählt ist.

6. Verwendung nach einem beliebigen der vorhergehenden Ansprüche, wobei das anionische Tensid, welches in Mischung mit dem Öl erneuerbaren Ursprungs vorliegt, in Dosen verwendet wird, die im Bereich von 1 Gewichts-% bis 30 Gewichts-%, stärker bevorzugt von 1 Gewichts-% bis 25 Gewichts-%, noch stärker bevorzugt von 2 Gewichts-% bis 20 Gewichts-%, und noch stärker bevorzugt von 2 Gewichts-% bis 15 Gewichts-%, vorteilhafterweise von 3 Gewichts-% bis 10 Gewichts-% einschließlich der Grenzwerte liegen, bezogen auf das Öl erneuerbaren Ursprungs.

7. Verwendung nach einem beliebigen der vorhergehenden Ansprüche, wobei es sich bei dem granulatartigen Material um ein beliebiges granulatartiges Material handeln kann, das innerhalb des Fachgebietes bekannt ist, wie etwa um solche, die als nicht-einschränkende Beispiele aus Düngemitteln, Kohle, Erzen von Mineralien, Aggregaten von Mineralien, Schwefel, Holzschnitzeln, Schlamm, Abfallgranulat, Arzneimitteln, Getreide, Tierfuttergranulat und dergleichen ausgewählt sind, wobei es sich bei dem granulatartigen Material stärker bevorzugt um ein Düngemittel handelt.

8. Verwendung nach einem beliebigen der vorhergehenden Ansprüche, wobei es sich bei dem granulatartigen Material um ein Düngemittel handelt, das aus den Nitraten, wie etwa den Ammoniumnitraten, den Nitrophosphaten, Ammoniumphoshatsulfat, Ammoniumsulfat, den Calciumammoniumnitraten, Calciumnitrat, Diammoniumphosphat, Kaliumchlorid, Monoammoniumphosphat, Chlorkalium, schwefelsaurem Kalium, schwefelsaurem Kalium-Magnesium, einfachem Superphosphat, dreifachem Superphosphat, Harnstoff, Schwefel, Polyhalit und anderen komplexen oder zusammengesetzten Düngemitteln, die mehrere Elemente enthalten, sowie derjenigen ausgewählt sind, welche unter der Abkürzung NPK bekannt sind.

9. Granulatartiges Material, das mit der flüssigen Formulierung umhüllt ist, welche mindestens ein Öl erneuerbaren Ursprungs gemäß der Begriffsbestimmung im Anspruch 1 und mindestens ein anionisches Tensid umfasst, das mindestens eine funktionelle Gruppe mit einem oder mehreren Heteroatom(en) aufweist, dessen/deren Elektronegativität streng kleiner als 2,5 ist, und das der Begriffsbestimmung im Anspruch 1 entspricht.

10. Granulatartiges Material nach Anspruch 9, wobei die Menge an flüssiger Formulierung, mit welcher das granulatartige Material umhüllt ist, im Bereich von 0,01 Gewichts-% bis 10 Gewichts-%, stärker bevorzugt von 0,02 Gewichts-% bis 2 Gewichts-%, vorteilhafterweise von 0,1 Gewichts-% bis 1 Gewichts-% einschließlich der Grenzwerte liegt, bezogen auf die Gesamtmasse des umhüllten granulatartigen Materials.

11. Granulatartiges Material nach Anspruch 9 oder Anspruch 10, wobei es sich bei dem granulatartigen Material um ein Düngemittelgranulat handelt.

## Claims

1. Use of a liquid formulation for coating granular materials, said formulation comprising:
- at least one oil of renewable origin, the viscosity of which at 20°C is between 2 mPa.s and 1500 mPa.s, limits included, as measured by means of a dynamic shear rheometer with parallel plate geometry at a shear rate of 80 s⁻¹, and selected from almond oil, avocado oil, cottonseed oil, cashew nut oil, grapeseed oil, hazelnut oil, rice bran oil, linseed oil, peanut oil, colza oil, sesame oil, sunflower oil, coconut oil, palm oil, palm kernel oil, corn oil, canola oil, soybean oil, olive oil and an oil derived from a papermaking process, and
- at least one anionic surfactant comprising at least one functional group having one or more heteroatoms, the electronegativity of which is strictly less than 2.5, said anionic surfactant comprising at least one compound of formula (1):
[R¹-A-(B)ₙ]ₘ-G (1)
in which
• R¹ represents a linear or branched, saturated or unsaturated, C₁-C₃₀, preferably C₂-C₃₀, preferably C₄-C₃₀, more preferably C₆-C₃₀, advantageously C₆-C₂₀, hydrocarbon chain optionally containing at least one aromatic ring,
• A represents a bond or an oxygen atom,
• (B)ₙ represents a bond or a sequence of one or more alkylene oxide repeating units, selected from ethylene oxide, propylene oxide, butylene oxide and mixtures of these, and n is an integer between 1 and 100, preferably between 1 and 50, more preferably between 3 and 40, limits included,
• m represents an integer of from 1 to 3, limits included,
• G is selected from formula (2) and formula (3): 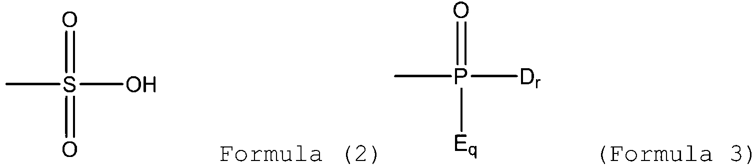
• D represents -O-(F)v-R², in which
∘ R² represents a hydrogen atom or a linear or branched, saturated or unsaturated, C₁-C₃₀, preferably C₂-C₃₀, preferably C₄-C₃₀, more preferably C₆-C₃₀, advantageously C₆-C₂₀, hydrocarbon chain optionally containing at least one aromatic ring, and
∘ (F)ᵥ represents a bond or a sequence of one or more alkylene oxide repeating units, selected from ethylene oxide, propylene oxide, butylene oxide and mixtures of these, and v is an integer between 1 and 100, preferably between 1 and 50, more preferably between 3 and 40, limits included,
• E represents -O-[J]ₛ-R³,
∘ R³ represents a hydrogen atom or a linear or branched, saturated or unsaturated, C₁-C₃₀, preferably C₂-C₃₀, preferably C₄-C₃₀, more preferably C₆-C₃₀, advantageously C₆-C₂₀, hydrocarbon chain optionally containing at least one aromatic ring, and
∘ (J)ₛ represents a bond or a sequence of one or more alkylene oxide repeating units, selected from ethylene oxide, propylene oxide, butylene oxide and mixtures of these, and s is an integer between 1 and 100, preferably between 1 and 50, more preferably between 3 and 40, limits included, and
• q and r each represent integers selected from 0, 1 and 2, with the proviso that m + q + r = 3.

2. Use according to Claim 1, wherein the oil derived from a papermaking process is tall oil.

3. Use according to either one of the preceding claims, wherein the anionic surfactant is present in a weight ratio of from 0.01 to 0.43, limits included, relative to the oil of renewable origin, more preferably in a weight ratio of from 0.02 to 0.33, limits included, relative to the oil of renewable origin, and more preferably still in a weight ratio of from 0.03 to 0.11, limits included, relative to the oil of renewable origin.

4. Use according to any one of the preceding claims, wherein the anionic surfactant comprises a compound comprising at least one phosphate group.

5. Use according to any one of the preceding claims, wherein the anionic surfactant is one selected from a monoalkyl ester phosphate, a dialkyl ester phosphate, a monoethoxylated alkyl ester phosphate, a diethoxylated alkyl ester phosphate, an ethoxylated alkyl sulfate and an alkylaryl sulfonate.

6. Use according to any one of the preceding claims, wherein the anionic surfactant which is mixed with the oil of renewable origin is used at doses of between 1% by weight and 30% by weight, more preferably between 1% by weight and 25% by weight, even more preferably between 2% by weight and 20% by weight, and even more preferably between 2% by weight and 15% by weight, advantageously between 3% by weight and 10% by weight, limits included, relative to the oil of renewable origin.

7. Use according to any one of the preceding claims, wherein said granular material may be any granular material known in the art, such as those selected from, as nonlimiting examples, fertilizers, coal, mineral ores, mineral aggregates, sulfur, wood chips, sludge, granulated wastes, medicaments, cereals, granulated animal feed, and the like, and more preferably the granular material is a fertilizer.

8. Use according to any one of the preceding claims, wherein said granular material is a fertilizer selected from nitrates, such as ammonium nitrates, nitrophosphates, ammonium phosphate sulfate, ammonium sulfate, calcium ammonium nitrates, calcium nitrate, diammonium phosphate, potassium chloride, monoammonium phosphate, muriate of potash, sulfate of potash, sulfate of potash magnesia, single superphosphate, triple superphosphate, urea, sulfur, polyhalite and other complex or composite fertilizers containing several elements, and those known under the acronym NPK.

9. Granular material coated with the liquid formulation comprising at least one oil of renewable origin as defined in Claim 1 and at least one anionic surfactant comprising at least one functional group having one or more heteroatoms, the electronegativity of which is strictly less than 2.5 as defined in Claim 1.

10. Granular material according to Claim 9, wherein the amount of liquid formulation coated onto said granular material is between 0.01% by weight and 10% by weight, more preferably between 0.02% by weight and 2% by weight, advantageously between 0.1% by weight and 1% by weight, limits included, relative to the total mass of the coated granular material.

11. Granular material according to Claim 9 or Claim 10, the granular material being a fertilizer granule.
